# EUROPEAN PATENT APPLICATION

(11) **EP 2 040 324 A1**
(43) Date of publication of application: **25.03.2009**
(21) Application number: 07767720.1
(22) Date of filing: 27.06.2007
(51) Int. Cl.: H01M 8/02, H01M 8/10

(54) **TUBULAR FUEL CELL AND PRODUCTION METHOD THEREOF**

(30) Priority: 27.06.2006 JP 2006176761
(71) Applicant: Toyota Jidosha Kabushiki Kaisha, Toyota-shi, Aichi 471-8571 (JP)
(72) Inventor: KATAYAMA, Yukihisa, Toyota-shi, Aichi 471-8571 (JP)
(74) Representative: Kuhnen & Wacker
(86) International application number: PCT/JP2007/062920
(87) International publication number: WO 2008/001814

(57) **Abstract**

It is to provide a tubular fuel cell which is formed in a tubular shape by a bending process and has an advantage of realizing a compact size of a cross section and further realizing a compact bulk, and a method of producing such a fuel cell. The tubular fuel cell (1) includes a tubular membrane electrode assembly (2) and a current collector (6) provided at the membrane electrode assembly (2) . The tubular membrane electrode assembly (2) includes an ion conductive membrane (3), a fuel side electrode (4) disposed on one side in a thickness direction of the ion conductive membrane (3), and an oxidizing agent side electrode (5) disposed on the other side in the thickness direction of the ion conductive membrane (3). In a cross section in a direction crossing a longitudinal direction of the tubular fuel cell (1), the membrane electrode assembly (2) has a shape bent in a folding direction.

## Description

### BACKGROUND OF THE INVENTION

### 1. Field of the Invention

The present invention relates to a tubular fuel cell and a production method thereof.

### 2. Description of the Related Art

Conventionally, Japanese Patent Laid-Open Publication No. 2005-100816 proposes a cell of a fuel cell, which includes a zirconia based solid electrolyte membrane, a ceramic based fuel side electrode disposed at a portion in a thickness direction of the zirconia based solid electrolyte membrane, a ceramic based oxidizing agent side electrode disposed at another portion in the thickness direction of the solid electrolyte membrane, and a ceria/samarium based intermediate layer disposed between the solid electrolyte membrane and the oxidizing agent side electrode. According to the above reference, first, a conductive supporting substrate molded body, which extends in a longitudinal direction, is formed by an extrusion molding process. Thereafter, the fuel side electrode is stacked on the conductive supporting substrate by coating and drying slurry for the fuel side electrode on the conductive supporting substrate. Then, the solid electrolyte membrane of ceramics is stacked on the fuel side electrode. The conductive supporting substrate in such a state is calcined at a temperature of about 1000°C, to thereby form a stacked calcined body. Thereafter, slurry containing raw material powder of the ceria/samarium based intermediate layer is coated on the solid electrolyte membrane of the stacked calcined body, and an intermediate molded body having the intermediate layer is formed. Thereafter, an oxygen side electrode is stacked on the intermediate layer of the intermediate stacked body. Here, the intermediate layer serves to restrain crack formation in the solid electrolyte membrane during plastic working.

Such a cell of the fuel cell is formed in a tubular shape, which extends in the longitudinal direction. The fuel side electrode and the solid electrolyte membrane have respectively a first end portion having a C-shaped cross section and a second end portion having a reverse C-shaped cross section.

Since the cell of the fuel cell has a tubular shape extending in the longitudinal direction, the cell has an advantage of realizing a compact size of the cross section as well as enhancing the performance of electricity generation. However, in the cell of the fuel cell disclosed in Japanese Patent Laid-Open Publication No. 2005-100816, the fuel side electrode and the intermediate layer are formed by the operation of coating and drying the slurry, and the cross section is not positively bent to a C shape and a reverse C shape by the operation of bending a membrane electrode assembly.

### SUMMARY OF THE INVENTION

The present invention has been made in view of the above problems, and the present invention is to provide a tubular fuel cell which is formed in a tubular shape by a bending process and has an advantage of realizing a compact size of a cross section and further realizing a compact bulk, and a method of producing such a fuel cell.

A tubular fuel cell in accordance with the first aspect of the present invention comprises (i) a tubular membrane electrode assembly including an ion conductive membrane having ion conductivity, a fuel side electrode disposed on one side in a thickness direction of the ion conductive membrane, and an oxidizing agent side electrode disposed on the other side in the thickness direction of the ion conductive membrane; and (ii) a current collector provided at the membrane electrode assembly,
(iii) in a cross section in a direction crossing a longitudinal direction of the tubular fuel cell, the membrane electrode assembly has a shape bent in a folding direction.
A membrane electrode assembly has a shape bent in a folding direction. Accordingly, the tubular fuel cell is easily formed. The tubular fuel cell has an advantage of realizing a compact size of a cross section and further a compact bulk, while enhancing the performance of electricity generation.

According to the tubular fuel cell in accordance with the second aspect of the present invention, in the aspect, the membrane electrode assembly includes a first end portion having a cross section bent in a C shape, and a second end portion having a cross section bent in a reverse C shape. In such a case, the tubular fuel cell of a good quality is formed. The C shape and the reverse C shape have a meaning that the membrane electrode assembly is not continuously mounted on a whole circumference of a center of an axis extending in a longitudinal direction of the tubular fuel cell, but is continuously mounted on a partial circumference of the center of the axis extending in the longitudinal direction of the tubular fuel cell, while having a notch at a predetermined portion. The C shape includes a similar C shape. The reverse C shape includes a similar reverse C shape. The similar C shape and the similar reverse C shape include a lying V shape, a lying U shape, an S shape and a similar S shape. However, the similar C shape and the similar reverse C shape are not restricted to the aforementioned shapes.

According to the tubular fuel cell in accordance with the third aspect of the present invention, in the aspect, in the cross section in the direction crossing the longitudinal direction of the fuel cell, (i) the ion conductive membrane of the membrane electrode assembly includes a first end portion which protrudes from a first end portion of the fuel side electrode and a first end portion of the oxidizing agent side electrode and is bonded to the current collector; and (ii) the ion conductive membrane of the membrane electrode assembly includes a second end portion which protrudes from a second end portion of the fuel side electrode and a second end portion of the oxidizing agent side electrode and is bonded to the current collector. In such a case, the end portions of the membrane electrode assembly are kept in a good condition in a shape of being bent in a folding direction, and thus a tubular fuel cell of good quality is formed.

According to the tubular fuel cell in accordance with the fourth aspect of the present invention, in the aspect, the tubular fuel cell includes a winding member to increase integrity of end portions of the membrane electrode assembly and the current collector by winding the membrane electrode assembly. In such a case, integrity of the end portions of the membrane electrode assembly and the current collector is further increased. It is preferred that the winding member has high electrical insulation. The string shaped or rope shaped winding member is exemplified.

According to the tubular fuel cell in accordance with the fifth aspect of the present invention, in the aspect, the current collector includes a concave shaped or convex shaped receiving portion to receive the winding member therein. In such a case, because the winding member is received, the winding member is restrained from disturbing current collecting and stacking operation.

According to the tubular fuel cell in accordance with the sixth aspect of the present invention, in the aspect, the current collector has a shape extending in the longitudinal direction of the tubular fuel cell. In such a case, it is easy to form the tubular fuel cell extending in a longitudinal direction.

According to the tubular fuel cell in accordance with the seventh aspect of the present invention, in the aspect, the tubular fuel cell includes a clamping member provided at a predetermined position, in which end portions of the membrane electrode assembly are fitted, to hold the end portions of the membrane electrode assembly together with the current collector. In such a case, the end portions of the membrane electrode assembly are fixed in a good condition.

A method of producing the tubular fuel cell in accordance with the eighth aspect of the present invention is the method of producing the tubular fuel cell according to the aspect as described above, the method comprises the steps of: (i) preparing a flat sheet shaped membrane electrode assembly including a flat sheet shaped ion conductive membrane having ion conductivity, a fuel side electrode disposed on one side in a thickness direction of the ion conductive membrane and an oxidizing agent side electrode disposed on the other side in the thickness direction of the ion conductive membrane, and a current collector provided at the membrane electrode assembly; and (ii) in a cross section in a direction crossing a longitudinal direction of the tubular fuel cell, forming bent portions by bending end portions of the flat sheet shaped membrane electrode assembly in a folding direction, and fixing the bent portions to the current collector. In such a case, the end portions of the membrane electrode assembly can be set in a shape bent in the folding direction. Accordingly, the tubular fuel cell has an advantage of realizing a compact size of a cross section and further realizing a compact bulk..

According to the tubular fuel cell in accordance with the ninth aspect of the present invention, in the aspect, the step of bending includes the steps of preparing a correcting member including a correcting cavity which has a first bending die surface and a second bending die surface provided opposite to each other and extends in the longitudinal direction of the tubular fuel cell, and bending the end portions of the membrane electrode assembly in the folding direction through correction by the first die surface and the second die surface by moving the membrane electrode assembly before corrected to the correcting cavity of the correcting member relatively to the correcting member in the longitudinal direction, and fixing the bent portions to the current collector. In such a case, the end portions of the membrane electrode assembly can be set in a shape extending in the folding direction. Accordingly, the tubular fuel cell has an advantage of realizing a compact size of a cross section and further realizing a compact bulk.

According to the tubular fuel cell in accordance with the tenth aspect of the present invention, in the aspect, the step of bending includes, in the cross section in the direction crossing the longitudinal direction of the tubular fuel cell, the steps of disposing a bending tool outside the membrane electrode assembly, and bending the end portions of the membrane electrode assembly in the folding direction through the bending tool by moving the bending tool close to the membrane electrode assembly, and fixing the bent portions to the current collector. In such a case, the end portions of the membrane electrode assembly can be set in a shape extending in the folding direction. Accordingly, the tubular fuel cell has an advantage of realizing a compact size of a cross section and further realizing a compact bulk.

According to the tubular fuel cell in accordance with the eleventh aspect of the present invention, in the aspect, the step of bending includes, in the cross section in the direction crossing the longitudinal direction of the tubular fuel cell, the steps of disposing a rollable body outside the membrane electrode assembly, and bending the end portions of the membrane electrode assembly in the folding direction by moving the rollable body close to the membrane electrode assembly and rolling the rollable body along the membrane electrode assembly, and fixing the bent portions to the current collector. In such a case, the end portions of the membrane electrode assembly can be set in a shape extending in the folding direction. Accordingly, the tubular fuel cell has an advantage of realizing a compact size of a cross section and further realizing a compact bulk.

According to the present invention, because the membrane electrode assembly is formed in a tubular shape by being bent, a tubular fuel cell, which has an advantage of realizing a compact size of a cross section and further realizing a compact bulk, can be obtained. Such a tubular fuel cell is more advantageous to realize a compact size of a cross section while securing electricity generating performance, in comparison with a flat plate shaped fuel cell.

### BRIEF DESCRIPTION OF THE DRAWINGS

The above and other obj ects and features of the present invention will become apparent from the following description of specified embodiment, given in conjunction with the accompanying drawings, in which:
FIG. 1 is a perspective view of a tubular fuel cell having a cross section cut in a transverse direction;
FIG. 2 (A) is a cross-sectional view showing a cross section of a tubular fuel cell cut in a transverse direction;
FIG. 2 (B) is a cross-sectional view showing a cross section of another tubular fuel cell cut in a transverse direction;
FIG. 2 (C) is a cross-sectional view showing a cross section of yet another tubular fuel cell cut in a transverse direction;
FIG. 3 is a cross-sectional view of an ion conductive membrane;
FIG. 4 is a cross-sectional view of another ion conductive membrane;
FIG. 5 is a cross-sectional view of a flat sheet shaped ion conductive membrane, which shows a producing process;
FIG. 6 is a cross-sectional view of a flat sheet shaped membrane electrode assembly, which shows a producing process;
FIG. 7 is a cross-sectional view of a state of loading first current collectors on the flat sheet shaped membrane electrode assembly, which shows a producing process;
FIG. 8 is a cross-sectional view of a state of loading first current collectors and a second current collector on the flat sheet shaped membrane electrode assembly, which shows a producing process;
FIG. 9 is a cross-sectional view of a state of bending end port ions of the flat sheet shaped membrane electrode assembly, which shows a producing process;
FIG. 10 is a cross-sectional view of a state of irradiating high energy density beam to end portions of the bent membrane electrode assembly, which shows a producing process;
FIG. 11 is a cross-sectional view of a state of binding the bent membrane electrode assembly by a winding member, which shows a producing process;
FIG. 12 is a perspective view showing an example of a process of bending the flat sheet shaped membrane electrode assembly;
FIG. 13 is a cross-sectional view showing another example of a process of bending the flat sheet shaped membrane electrode assembly;
FIG. 14 is a perspective view showing yet another example of a process of bending the flat sheet shaped membrane electrode assembly;
FIG. 15 is a cross-sectional view showing a further example of a process of bending the flat sheet shaped membrane electrode assembly;
FIG. 16 is a cross-sectional view showing a cross section of a tubular fuel cell cut in a transverse direction, which shows a second embodiment;
FIG. 17 is a cross-sectional view showing a cross section of a tubular fuel cell cut in a transverse direction, which shows a third embodiment;
FIG. 18 is a cross-sectional view showing a cross section of a tubular fuel cell cut in a transverse direction, which shows a fourth embodiment;
FIG. 19 is a cross-sectional view showing a cross section of a tubular fuel cell cut in a transverse direction, which shows a fifth embodiment;
FIG. 20 is a cross-sectional view showing a state of stacking a plurality of tubular fuel cells, which shows a sixth embodiment;
FIG. 21 is a cross-sectional view showing a state of stacking a plurality of tubular fuel cells and simultaneously arranging the tubular fuel cells parallel to each other in a transverse direction, which shows a seventh embodiment;
FIG. 22 is a cross-sectional view showing a cross section of stacked tubular fuel cells cut in a transverse direction, which shows an eighth embodiment;
FIG. 23 is a cross-sectional view showing a cross section of stacked tubular fuel cells cut in a transverse direction, which shows a ninth embodiment;
FIG. 24 is a cross-sectional view showing a cross section of a tubular fuel cell cut in a transverse direction, which shows a tenth embodiment;
FIG. 25 is a perspective view of a tubular fuel cell having a cross section cut in a transverse direction, which shows an eleventh embodiment;
FIG. 26 is a cross-sectional view showing a cross section of a tubular fuel cell cut in a transverse direction, which shows a twelfth embodiment;
FIG. 27 is a cross-sectional view of a tubular fuel cell cut in a transverse direction before the tubular fuel cell is bent, which shows a thirteenth embodiment;
FIG. 28 is a cross-sectional view of a membrane electrode assembly cut in a transverse direction before the membrane electrode assembly is bent, which shows a fourteenth embodiment;
FIG. 29 is a partial perspective view of a first current collector, which shows a fifteenth embodiment; and
FIG. 30 is a cross-sectional view of a tubular fuel cell cut in a transverse direction before the tubular fuel cell is bent, which shows a sixteenth embodiment.

### EXPLANATION OF REFERENCE NUMERALS

1: tubular fuel cell
2: membrane electrode assembly
20: end portions of membrane electrode assembly
230: clamping member
3: ion conductive membrane
4: fuel side electrode
41: fuel side catalyst layer
42: fuel side transmission layer
5: oxidizing agent side electrode
51: oxidizing agent side catalyst layer
52: oxidizing agent side transmission layer
6: current collector
61: first current collectors
61h: refrigerant passage
62: second current collector
68: winding member
69: receiving portion
7: correcting die (correcting member)
8: bending tool

### DESCRIPTION OF THE SPECIFIC EMBODIMENTS

Various embodiments of the present invention will now be described in detail with reference to the accompanying drawings.

A tubular fuel cell according to the present invention comprises a membrane electrode assembly which is bent in a tubular shape, and a current collector provided at the membrane electrode assembly. The tubular shape includes a tubular shape which has a substantially flat cross section, a tubular shape which has a substantially perfect circular shaped cross section, and a tubular shape which has a substantially elliptical shaped cross section.

The membrane electrode assembly, which is bent in a tubular shape, includes an ion conductive laver, a fuel side electrode disposed at a portion in a thickness direction of the ion conductive membrane, and an oxidizing agent side electrode disposed at another portion in the thickness direction of the ion conductive membrane. Only if having a current collecting function, the current collector may be made of any material and any structure, however a carbon based or metal based current collector is exemplified here. When the metal based current collector is used, it is preferable to use the metal based current collector having high corrosion resistance, and an alloy (such as stainless steel, etc.) based, titanium based or aluminum based current collector is exemplified here. The fuel side electrode is an electrode of a part, to which fuel is supplied. The oxidizing agent side electrode is an electrode of a part, to which oxidizing agent fluid is supplied. Gas fuel (e.g., hydrogen gas or hydrogen-contained gas), liquid fuel (e.g., methanol, ethanol or dimethyl ether) or solid fuel (e.g., hydrogen compound such as boron hydride, etc.) is exemplified as the fuel. Oxygen-contained gas such as air, etc., or oxygen gas is exemplified as the oxidizing agent.

Preferably, a cross section cut in a direction crossing a longitudinal direction of the tubular fuel cell (membrane electrode assembly) has a shape such that at least one of an end portion and the other end portion of the membrane electrode assembly is bent in a folding direction.

The ion conductive membrane formed by using a solid polymer material as a base material is exemplified here, however a material formed by compounding or mixing an inorganic material and a polymer material may also be used. A fluorocarbon (e.g., perfluorosulfonic acid membrane) based or hydrocarbon based material is exemplified as the solid polymer material. Here, the ion conductive membrane is formed by using a solid polymer material as a base material, and a pattern having a reinforcement member is exemplified. The reinforcement member may be made of a fiber or a porous polymer material. A composite membrane, which includes first portions having high ion conductivity and second portions having reinforcing properties, is exemplified as the ion conductive membrane. It is preferred that the current collector is provided with junction portions to bond end portions of the membrane electrode assembly thereto.

The junction portions may be in a roughened state. The junction portions having a winding member, to enhance junction of the end portions of the membrane electrode assembly and the current collector by being wound on the membrane electrode assembly, are exemplified here. A member having flexibility, such as a string, a thread, a rope, etc., or a ring shaped member having elasticity is exemplified as the winding member. A resin based, carbon based, ceramic based or metal based material is exemplified as a material of the winding member, however it is preferable to use a material having high electrical insulation so as to have no influence on the current collecting performance by the current collector. Specifically, it is preferable to use a material having a high glass transition point.

The current collector having a concave or convex shaped receiving portion for receiving the winding member therein is exemplified here. In such a case, because the winding member is received in the receiving portion, the winding member is restrained from disturbing current collecting operation. The exemplified fuel side electrode includes a fuel side catalyst layer and a fuel side transmission layer, and the exemplified oxidizing agent side electrode includes an oxidizing agent side catalyst layer and an oxidizing agent side transmission layer. The catalyst layer is generally provided, however, in some cases, the catalyst layer is not provided in a high temperature type fuel cell. It is preferable to use the fuel side transmission layer and the oxidizing agent side transmission layer having porosity and conductivity, and carbon based, metal based or metal-ceramics mixture based transmission layers are exemplified here. The current collector may have a refrigerant channel.

The exemplified current collector includes first current collectors in electric contacted with the fuel side electrode or the oxidizing agent side electrode, and a second current collector in electric contact with the first current collectors. Because the first current collectors and the second current collector are assembled with each other, a current collecting path can be easily secured. The exemplified first current collectors or second current collector has a shape (e.g., rod shaped member or wire member) which extends in a longitudinal direction of the tubular fuel cell. A structure that a clamping member to hold the end portions of the membrane electrode assembly together with the current collector is mounted to a predetermined position, in which the end portions of the membrane electrode assembly are fitted, is exemplified here. A material of the clamping member is not particularly limited, however a carbon based, metal based or resin based clamping member is exemplified.

According to a method of producing the tubular fuel cell in accordance with the present invention, the method comprises the steps of: (i) preparing a flat sheet shaped membrane electrode assembly including a flat sheet shaped ion conductive membrane having ion conductivity, a fuel side electrode disposed on one side in a thickness direction of the ion conductive membrane and an oxidizing agent side electrode disposed on the other side in the thickness direction of the ion conductive membrane, and a current collector provided at the membrane electrode assembly; and (ii) in a cross section in a direction crossing a longitudinal direction of the tubular fuel cell, forming bent portions by bending end portions of the flat sheet shaped membrane electrode assembly in a folding direction, and fixing the bent portions to the current collector. In such a case, it is possible to form the tubular fuel cell of good quality extending in longitudinal direction.

Also, the bending process according to one example can include the steps of (a) preparing a correcting member including a correcting cavity which has a first bending die surface and a second bending die surface provided opposite to each other and extends in the longitudinal direction of the tubular fuel cell, and (b) bending the end portions of the membrane electrode assembly in the folding direction through correction by the first die surface and the second die surface by moving the membrane electrode assembly before corrected to the correcting cavity of the correcting member relatively to the correcting member in the longitudinal direction, and fixing the bent portions to the current collector. In such a case, the end portions of the membrane electrode assembly may be bent in good condition.

Further, the bending process according to other example can include, in the cross section in the direction crossing the longitudinal direction of the tubular fuel cell, the steps of (a) disposing a bending tool outside the membrane electrode assembly, and (b) bending the end portions of the membrane electrode assembly in the folding direction through the bending tool by moving the bending tool close to the membrane electrode assembly, and fixing the bent portions to the current collector. In such a case, the end portions of the membrane electrode assembly may be bent in good condition.

Further, the bending process according to another example can include, in the cross section in the direction crossing the longitudinal direction of the tubular fuel cell, the steps of (a) disposing a rollable body outside the membrane electrode assembly, and (b) bending the end portions of the membrane electrode assembly in the folding direction by moving the rollable body close to the membrane electrode assembly and rolling the rollable body along the membrane electrode assembly, and fixing the bent portions to the current collector. In such a case, the end portions of the membrane electrode assembly may be bent in good condition. A cylindrical roller or a spherical body is exemplified as the rollable body.

With respect to the fixing process, it is exemplified to perform through an adhesive coated on at least a portion of the membrane electrode assembly and the current collector, or welding or fusion of at least a portion of the membrane electrode assembly. In the fixing process, it is exemplified to perform by bonding the end portions of the ion conductive membrane of the membrane electrode assembly to the current collector. With respect to the bonding, it is exemplified to perform by applying at least one of a pressing force, high energy density beam, ultraviolet light, infrared light and thermal energy to the bonding portion between the membrane electrode assembly and the current collector.

### [Embodiment 1]

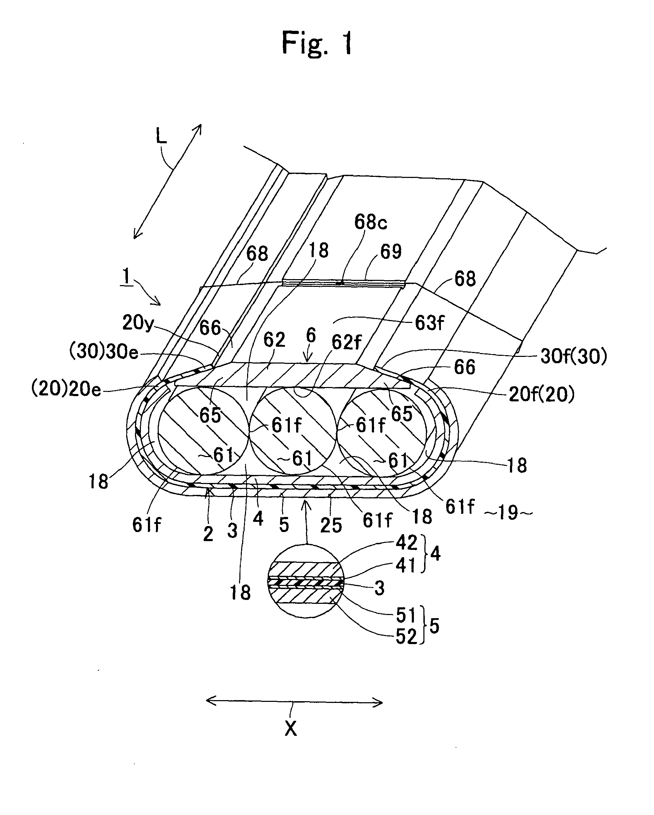

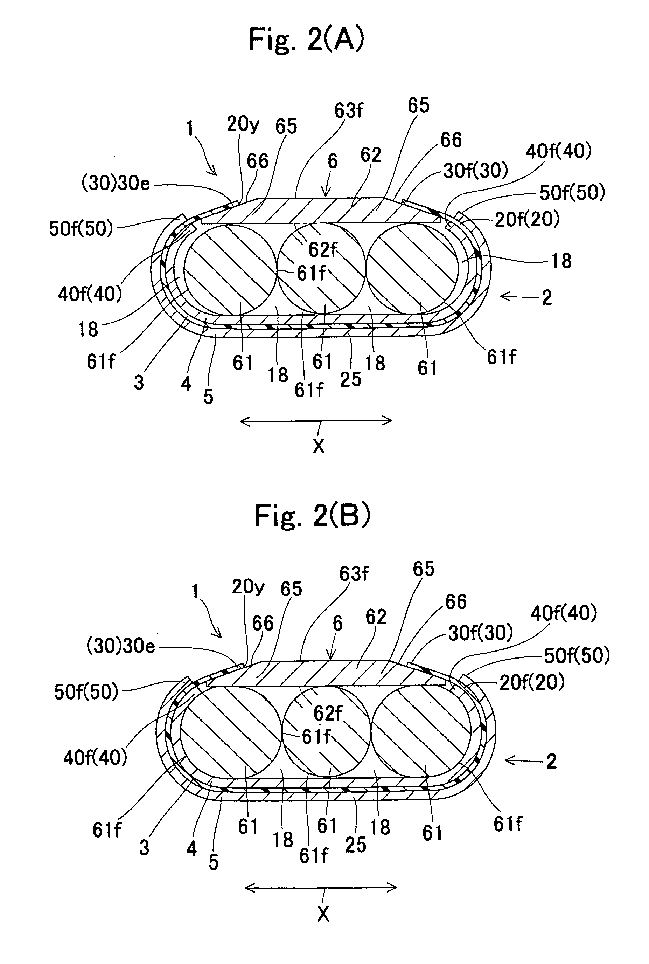

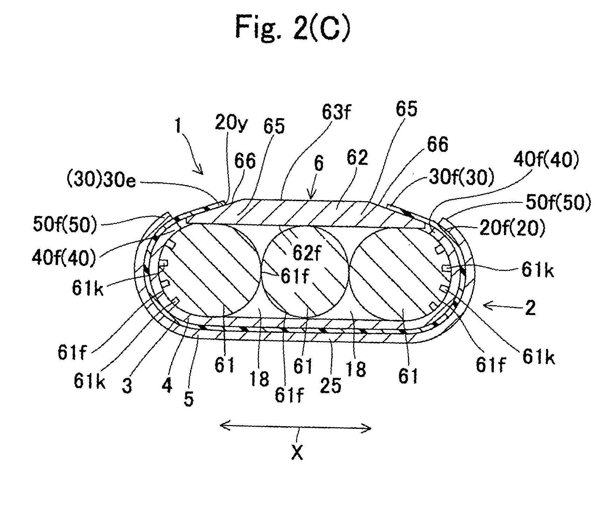

FIGS. 1 to 15 show embodiment 1. In order to avoid complexity in the drawings, there are some parts in which hatching is omitted. FIG. 1 is a perspective view of a flat shaped tubular fuel cell 1 which has a cross section cut in a transverse direction (X direction) and extends in a longitudinal direction (arrow L direction). FIG. 2 (A) shows a cross section of a tubular fuel cell 1. FIG. 2 (B) shows a cross section of another tubular fuel cell 1. FIG. 2 (C) shows a cross section of yet another tubular fuel cell 1. The tubular fuel cells 1 in FIGS. 2(A) to 2(C) basically have the same constitution as each other.

As shown in FIG. 1, the tubular fuel cell 1 according to the present invention is formed in a long flat tubular shape. The tubular fuel cell 1 includes a membrane electrode assembly 2 bent in a tubular shape, and a current collector 6 provided in the membrane electrode assembly 2. The membrane electrode assembly 2 bent in a tubular shape includes a sheet shaped ion conductive membrane 3 having ion conductivity (proton conductivity), a sheet shaped fuel side electrode 4 having flexibility, which is adhered to one side in a thickness direction of the ion conductive membrane 3, and a sheet shaped oxidizing agent side electrode 5 having flexibility, which is adhered to the other side in the thickness direction of the ion conductive membrane 3. The fuel side electrode 4 is an electrode of a part, to which fuel (hydrogen gas or hydrogen-contained gas) is supplied. The oxidizing agent side electrode 5 is an electrode of a part, to which oxidizing agent fluid (oxygen-contained gas such as air, etc.) is supplied.

Here, as shown in FIG. 1, the fuel side electrode 4 includes a fuel side catalyst layer 41 in contact with the ion conductive membrane 3, and a fuel side transmission layer 42 disposed on the opposite side to the ion conductive membrane 3. The oxidizing agent side electrode 5 includes an oxidizing agent side catalyst layer 51 contact with the ion conductive membrane 3, and an oxidizing agent side transmission layer 52 disposed on the opposite side to the ion conductive membrane 3. The fuel side catalyst layer 41 and the oxidizing agent side catalyst layer 51 contain a catalyst component, a polymer electrolyte component having ion conductivity, and a fine conductive material such as carbon black, etc. The catalyst component may be at least one of platinum, ruthenium, palladium and rhodium.

The fuel side transmission layer 42 and the oxidizing agent transmission layer 52 have porosity (fluid passability) and conductivity, and are formed in an assembly type of a carbon material such as carbon fiber, so that the transmission layers may also serve as a current collector having fluid transmission and flexibility. A carbon paper made by depositing carbon fibers or a carbon cross made by weaving carbon fibers is exemplified as the assembly of a carbon material.

As shown in FIG. 1, the tubular fuel cell 1 is structured such that the fuel side electrode 4 is disposed inward of the membrane electrode assembly 2 and opposes a fuel fluid channel 18 formed inside the tubular fuel cell 1. The oxidizing agent side electrode 5 is disposed outward of the membrane electrode assembly 2, and opposes an oxidizing agent fluid channel 19 formed outside the tubular fuel cell 1.

As shown in FIGS. 1 and 2, in the membrane electrode assembly 2, a middle portion 25 of the membrane electrode assembly 2 is basically not bent, and is formed in a flat shape along a width direction (arrow X direction) of the tubular fuel cell 1. If using the flat shaped middle portion 25, a power output area is easily secured, and power is easily outputted. In this regard, end portions 20 (first end portion 20e and second end portion 20f opposite to the first end portion) have a half-moon shape bent in the folding direction from the middle portion 25. In other words, a first end portion 30e of the ion conductive membrane 3 of the membrane electrode assembly 2 is bent in a C shape (half-moon shape), and thus extends in the folding direction. A second end portion 30f of the ion conductive membrane 3 is bent in a reverse C shape (half-moon shape), and thus extends in the folding direction. As shown in FIGS. 1 and 2, the catalyst membrane 20 of the membrane electrode assembly 2 is not mounted on the whole circumference of a center of an axis in a longitudinal direction (arrow L direction) of the tubular fuel cell 1, but the first end portion 20e and the second end portion 20f of the catalyst membrane 20 are formed with an opening 20y, and a second current collector 62 sealingly blocks the opening 20y.

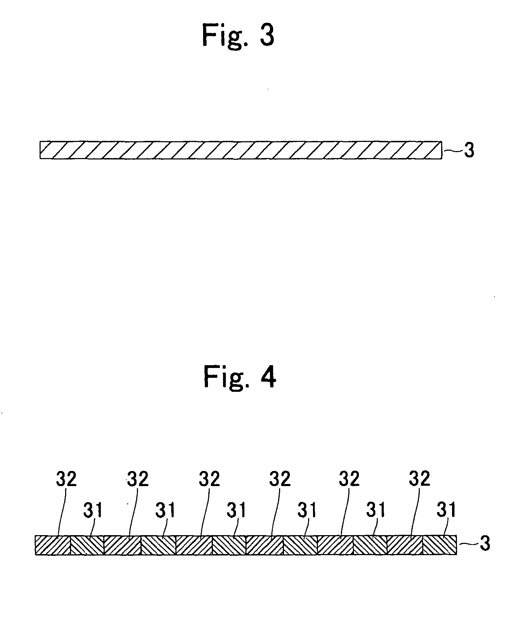

The ion conductive membrane 3 is formed by using a solid polymer material as a basematerial . A fluorocarbon (e.g., perfluorosulfonic acid based polymer membrane) based material or a hydrocarbon based material having an ion conductor (proton conductor) is exemplified as the solid polymer material. Here, the ion conductive membrane 3, as shown in FIG. 3, may be formed by using a solid polymer material having ion conductivity (e.g., proton conductivity), water-containing properties and flexibility as a base material. Also, the ion conductive membrane 3, as shown in FIG. 4, may employ a composite membrane including first portions 31 made of a solid polymer material and second portions 32 made of a solid polymer material. Here, the first portions 31 have high ion conductivity. The second portions 32 have ion conductivity lower than the first portions 31 or do not have ion conductivity, and may serve as a reinforcement member for reinforcing the ion conductive membrane 3. Besides of increasing electricity generation efficiency by enhancing gas leak prevention, such a composite membrane can restrain wrinkle generation in the ion conductive membrane 3 and can increase durability, even when electricity generating operation is performed for a long period.

The current collector 6 has a current collecting function (conducting function), and the carbon based, metal based or metal-ceramics mixture based current collector is exemplified here. The current collector 6 includes first current collectors 61 in electric contact with the fuel side electrode 4 of the membrane electrode assembly 2, and a second current collector 62 in electric contact with the first current collectors 61. The first current collectors 61 are formed by arranging a plurality of wires or rods, which have a cross section of a predetermined shape and extend in the longitudinal direction (arrow L direction), parallel to each other in the direction (arrow X direction) of the membrane electrode assembly 2.

Because the first current collectors 61 are disposed inside the tubular membrane electrode assembly 2, the first current collectors 61 can contribute to preserve the shape of the tubular membrane electrode assembly 2. Also, the first current collectors 61 may be formed in a dense body, or may have porosity to increase fluid transmission properties, or may be made of a material deformable by being crushed in a diameter direction to increase conductive contact properties.

First conductive surfaces 61f formed on outer wall surfaces of the first current collectors 61 are in electric contact with the fuel side electrode 4 of the membrane electrode assembly 2. The first conductive surfaces 61f of the first current collectors 61 adjacent to each other are in electric contact with each other. The second current collector 62 is formed in a plate shape, which has a cross section of a predetermined shape and extends in the longitudinal direction (arrow L direction). The second current collector 62 includes a second conductive surface 62f in electric contact with the first conductive surfaces 61f of the first current collectors 61, and an exposed conductive surface 63f exposed outside. Because the first current collectors 61 and the second current collector 62 extend in the longitudinal direction (arrow L direction), it is easy to secure a rigidity and a length in the longitudinal direction of the tubular fuel cell 1.

In order to realize a function of isolating the fuel fluid channel 18 and the oxidizing agent fluid channel 19 from each other as well as a current collecting function, it is preferable to use the second current collector 62 having high dense properties. The second current collector 62 is provided with junction portions 65 having junction surfaces 66. The junction surfaces 66 are attached to the end portions 30 (first end portion 30e and second end portion 30f) of the ion conductive membrane 3 of the membrane electrode assembly 2. Because the junction surfaces 66 extend in the longitudinal direction (arrow L direction), a junction area is secured. The junction surfaces 66 are directed outward in the arrow X direction, and thus are formed in a downwardly-slanted surface. In other words, the junction surfaces 66 are directed toward the bent portions of the ion conductive membrane 3, and thus are formed in a downwardly-slanted surface. This is for easily bonding the end portions 30 of the ion conductive membrane 3. In order to enhance bonding to the ion conductive membrane 3, the junction surfaces 66 of the junction portions 65 may be in a roughened state. Also, the junction surfaces 66 may have been previously coated with an adhesive.

According to this embodiment, the current collector 6 is formed by assembling the first current collectors 61 received in the tubular membrane electrode assembly 2 and the second current collector 62 in electric contact with the first current collectors 61. Therefore, though the membrane electrode assembly 2 is bent, a current collecting path of the membrane electrode assembly 2 can be easily secured. Because the first current collectors 61 extend in the longitudinal direction, it is easy to secure a conductive contact area with the membrane electrode assembly 2.

If the first end portion 30e and the second end portion 30f of the ion conductive membrane 3 of the membrane electrode assembly 2 are sealingly bonded to the junction surfaces 66 of the junction portions 65 of the current collector 6, the fuel fluid channel 18 and the oxidizing agent fluid channel 19 are isolated from each other. Accordingly, the fuel fluid flowing through the fuel fluid channel 18 is prevented from flowing into the oxidizing agent fluid channel 19. Similarly, the oxidizing agent fluid flowing through the oxidizing agent fluid channel 19 is prevented from flowing into the fuel fluid channel 18.

As shown in FIG. 1, the exposed conductive surface 63f of the current collector 6 is formed with a single or a plurality of concave shaped receiving portions 69. The receiving portion 69 extends in an arrangement direction (arrow X direction) of the first current collectors 61. As described later, if a winding member 68 having high electrical insulation is received in the receiving portion 69, deterioration of current collecting performance is restrained.

In the electricity generating operation, the fuel fluid (generally, hydrogen gas or hydrogen-contained gas) is supplied to the fuel fluid channel 18, and at the same time the oxidizing agent fluid (generally, air or oxygen-contained gas) is supplied to the oxidizing agent fluid channel 19. In such a case, the fuel fluid is transmitted to the fuel side catalyst layer 41 from the fuel side transmission layer 42 of the fuel side electrode 4, and is divided into protons and electrons by a catalyst component of the fuel side catalyst layer 41. The electrons are collected to the second current collector 62 through the first current collectors 61. The protons permeate the ion conductive membrane 3 in a thickness direction, and reach the oxidizing agent side electrode 5. Oxygen in the oxidizing agent fluid supplied to the oxidizing agent fluid channel 19 permeates the oxidizing agent side transmission layer 52 of the oxidizing agent side electrode 5, reaches the oxidizing agent side catalyst layer 51, and reacts to the protons permeating the ion conductive membrane 3, thereby generating water. By such electricity generating reaction, electrical energy is outputted.

Also, if a pressure of the fuel fluid supplied to the fuel fluid channel 18 is represented by Pi and a pressure of the oxidizing agent fluid supplied to the oxidizing agent fluid channel 19 is represented by Po, the pressure Po is higher than the pressure Pi (Po > Pi). Therefore, the end portions 30 (first end portion 30e and second end portion 30f) of the ion conductive membrane 3 of the membrane electrode assembly 2 are pushed in a direction of being pressed to the junction surfaces 66 of the current collector 6. Insuchacase, separation of the endportions 30 of the ion conductive membrane 3 can be more prevented. As such, the pressure of the fuel fluid and the pressure of the oxidizing agent fluid are set to be applied in a direction of pressing the end portions 30 (first end portion 30e and second end portion 30f) of the ion conductive membrane 3 of the membrane electrode assembly 2 to the junction surfaces 66 of the current collector 6. However, the relation between the pressure Po and the pressure Pi is not limited to Po > Pi, and also can be set to Po < Pi, Po ≒ Pi or Po = Pi as needed.

Here, according to the tubular fuel cell 1 shown in FIG. 2(B), frequency of contacting the first conductive surfaces 61f of the outer surfaces of the first current collectors 61 and the surface of the electrode (fuel side electrode 4) of the membrane electrode assembly 2 is increased. Therefore, a contact conductive area is increased. The first conductive surfaces 61f are formed in an arc convex shape. The surface of the corresponding electrode is formed in an arc concave shape, which is engaged with the arc convex surface. Accordingly, the contact conductive area can be easily increased, and electricity generating efficiency can be improved.
Also, according to the tubular fuel cell 1 shown in FIG. 2(C), frequency of contacting the first conductive surfaces 61f and the electrode (fuel side electrode 4) of the membrane electrode assembly 2 is increased. Also, concave portions 61k (fluid channel), such as recesses, etc., are formed at portions of the first conductive surfaces 61f of the first current collectors 61, which oppose the electrode (fuel side electrode 4) of the membrane electrode assembly 2. In such a case, because the fuel fluid (reaction fluid) can pass through the concave portions 61k, the fuel fluid (reaction fluid) is securely supplied to the electrode (fuel side electrode 4) of the membrane electrode assembly 2.

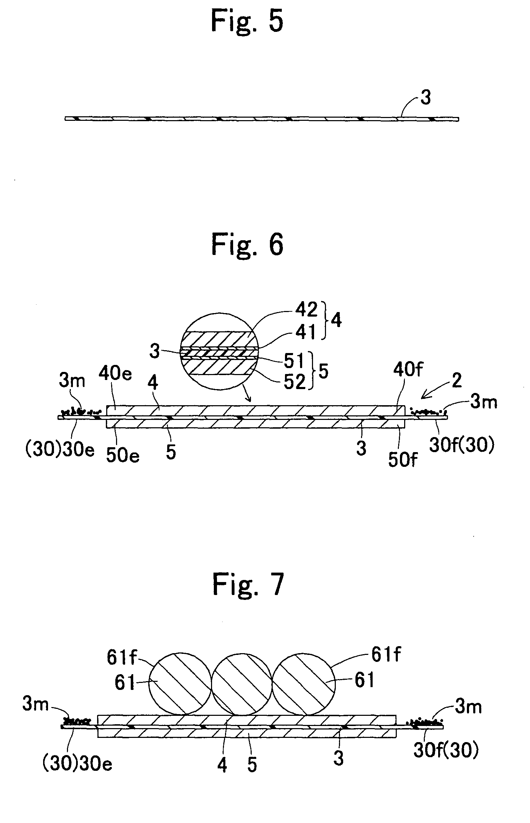

An example of a method of producing the tubular fuel cell 1 will now be explained. First, as shown in FIG. 5, the flat sheet shaped ion conductive membrane 3 having flexibility is prepared. The end portions 30 (first end portion 30e and second end portion 30f) of the ion conductive membrane 3 may have been previously subjected to roughening treatment such as corona discharge, etc. As shown in FIG. 6, the fuel side electrode 4 is stacked on one side in the thickness direction of the ion conductive membrane 3, and at the same time the oxidizing agent side electrode 5 is disposed on the other side in the thickness direction of the ion conductive membrane 3. Thereby, the flat sheet shaped membrane electrode assembly 2 is formed. The ion conductive membrane 3, the fuel side electrode 4 and the oxidizing agent side electrode 5 have flexibility, and can be bent. As shown in FIG. 6, in the flat sheet state, the first end portion 30e of the ion conductive membrane 3 protrudes outward from a first end portion 40e of the fuel side electrode 4 and a first end portion 50e of the oxidizing agent side electrode 5. Also, the second end portion 30f of the ion conductive membrane 3 protrudes outward from a second end portion 40f of the fuel side electrode 4 and a second end portion 50f of the oxidizing agent side electrode 5. Next, as shown in FIG. 7, the first current collectors 61 provided at the membrane electrode assembly 2 are stacked on the membrane electrode assembly 2. Thereafter, the second current collector 62 is stacked on the first current collectors 61.

In the producing process, it is preferable to previously coat an adhesive 3m on the end portions 30 (first end portion 30e and second end portion 30f) of the ion conductive membrane 3. It is also preferable to previously coat the adhesive 3m on the junction surfaces 66 of the junction portions 65 of the second current collector 62. However, the adhesive 3m may be coated on either the end portions 30 or the junction surfaces 66. A thermosetting type or ultraviolet curing type adhesive may be exemplified as the adhesive 3m.

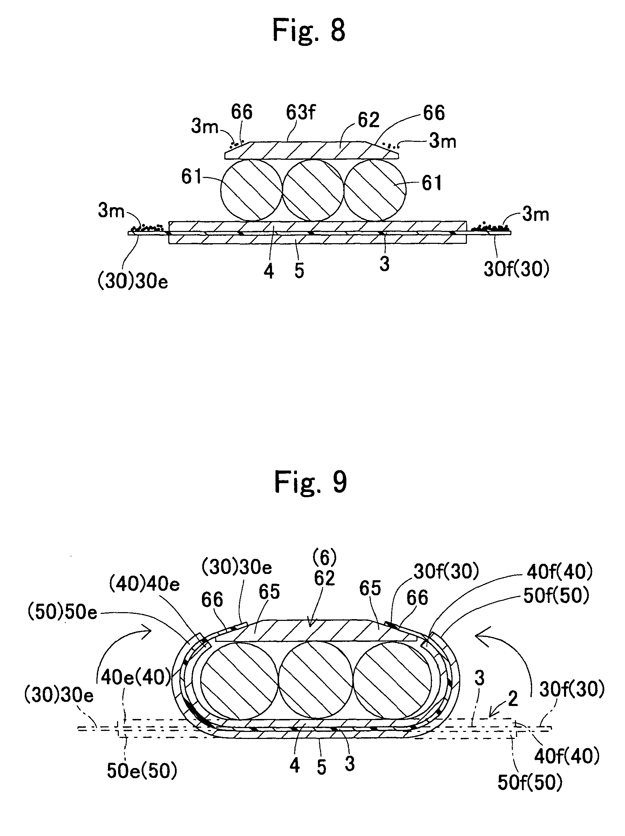

FIG. 9 shows a cross section cut in a direction crossing the longitudinal direction of the tubular fuel cell 1. As shown in FIG. 9, a bending process is performed, in which the end portions 30 (first end portion 30e and second end portion 30f) of the ion conductive membrane 3 of the flat sheet shaped membrane electrode assembly 2 having flexibility are bent in the folding direction. At this time, end portions 50 (first end portion 50e and second end portion 50f) of the oxidizing agent side electrode 5 and end portions 40 (first end portion 40e and second end portion 40f) of the fuel side electrode 4 are also bent.

As a result, as shown in FIG. 9, the first end portion 30e of the ion conductive membrane 30 of the membrane electrode assembly 2 is bent in a C shape, and the second end portion 30f is bent in a reverse C shape. Similarly, the first end portion 50e of the oxidizing agent side electrode 5 is bent in a C shape, and the second end portion 50f is bent in a reverse C shape. Similarly, the first end portion 40e of the fuel side electrode 4 is bent in a C shape, and the second end portion 40f is bent in a reverse C shape. Then, the bent portions of the membrane electrode assembly 2 are placed on the junction surfaces 66 of the junction portions 65 of the current collector 6. Particularly, as shown in FIG. 9, the first end portion 30e of the ion conductive membrane 30 is placed on the junction surface 66 of one of the junction portions 65 of the current collector 6. Similarly, the second end portion 30f of the ion conductive membrane 30 is placed on the junction surface 66 of the other junction portion 65 of the current collector 6. In such a case, bonding properties is improved by the adhesive 3m and the roughening treatment. In such a case, it is preferable to enhance bonding properties of the junction portions of the ion conductive membrane 3 by applying proper pressing operation to the junction portions.

As shown in FIG. 9, the first end portion 30e of the ion conductive membrane 3 protrudes outward from the first end portion 40e of the fuel side electrode 4 and the first end portion 50e of the oxidizing agent side electrode 5, and is fixedly adhered to one of the junction surfaces 66 of the second current collector 62. Also, the second end portion 30f of the ion conductive membrane 3 protrudes outward from the second end portion 40f of the fuel side electrode 4 and the second end portion 50f of the oxidizing agent side electrode 5, and is fixedly adhered to the other junction surface 66 of the second current collector 62.

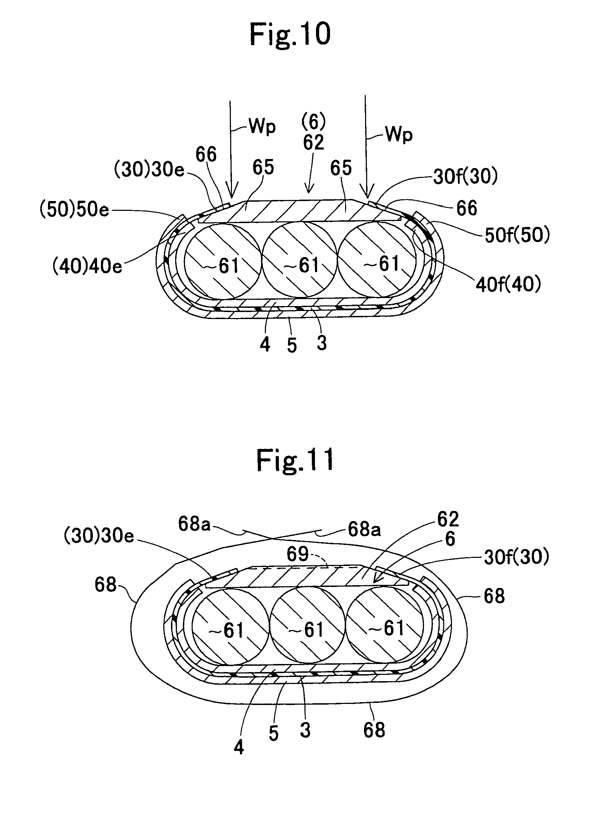

Further, as needed, as shown in FIG. 10, in order to accelerate welding or fusion, a high energy density beam Wp (e.g., laser beam or electron beam) may be radiated to the first end portion 30e and second end portion 30f (bent portions) of the ion conductive membrane 3 and the junction areas of the junction surfaces 66 of the junction portions 65 of the current collector 6. By this, performance of fixing the bent portions to the junction surfaces 66 of the junction portions 65 of the current collector 6 can be further increased. If not necessary, the high energy density beam Wp may be omitted.
Also, in a case where the adhesive 3m is a thermosetting type, the adhesive 3m may be hardened by radiating thermal energy, such as infrared light, to the junction areas, instead of radiating the high energy density beam Wp. Also, in a case where the adhesive 3m is an ultraviolet curing type, the adhesive 3m may be hardened by radiating ultraviolet light to the junction areas.

Thereafter, as shown in FIG. 11, the thread shaped or string shaped winding member 68 is wound on the bent membrane electrode assembly 2 from the outside, and both end portions 68a of the winding member 68 are tied to each other. As a result, integration of the end portions 20 of the membrane electrode assembly 2 and the current collector 6 can be further enhanced. As such, if using the winding member 68, electric contact between the fuel side electrode 4 and the first current collectors 61 can be further improved. Also, electric contact between the first current collectors 61 and the second current collector 62 can be improved. In order to improve contact or binding features, the winding member may have a structure (e.g., a rubber band) having high elasticity to apply a pressing force, or may have a structure having convex shaped protrusions which protrude toward the membrane electrode assembly 2.

It is preferred that the winding member 68 is provided in plural numbers and a plurality of winding members are mounted with intervals therebetween in the longitudinal direction of the fuel cell 1. In such a case, the number of binding points by the winding members 68 is plural, with intervals therebetween in the longitudinal direction of the fuel cell 1. The winding member 68 and a tied portion 68c thereof (refer to FIG. 1) are received in the concave shaped receiving portion 69 of the second current collector 62. Thus, the winding member 68 is prevented from interrupting the current collection. The material of the winding member 68 is not particularly limited, but is preferably a resin having high electrical insulation, high tensile strength and a high glass transition point (e.g., a resin fiber, such as nylon, aramid, polyethersulfone, etc.). Specifically, an engineer plastic based resin is preferable. However, the material of the winding member is not limited to the aforementioned materials.

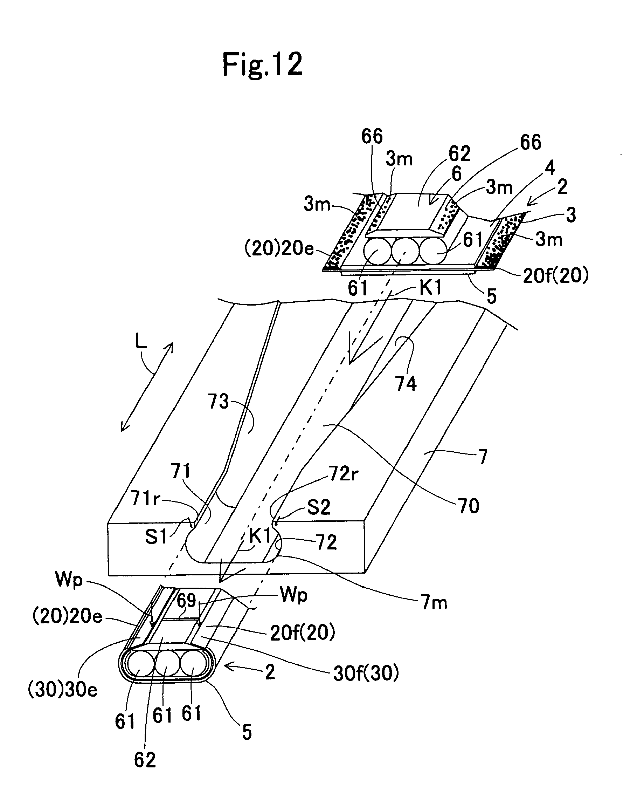

FIGS. 12 to 15 show other representative types of the bending process. The type of the bending process is not limited to FIGS. 12 to 15.
In a case shown in FIG. 12, a correcting die 7 is prepared as a correcting member for correcting the shape of the membrane electrode assembly 2 by bending the same. The correcting die 7 is provided with a correcting cavity 70 which extends in the longitudinal direction (arrow L direction) of the tubular fuel cell 1. The correcting cavity 70 includes a first bending die surface 71 having a C-shaped cross section, a second bending die surface 72 having a reverse C-shaped cross section, a first conical shaped guide surface 73 which is inclined such that an inner diameter thereof is decreased toward the first bending die surface 71, and a second conical shaped guide surface 74 which is inclined such that an inner diameter thereof is decreased toward the second bending die surface 72.

As shown in FIG. 12, the membrane electrode assembly 2 before being corrected is passed through the correcting cavity 70 of the correcting die 7. Accordingly, the membrane electrode assembly 2 is moved relatively to the correcting die 7 in the longitudinal direction of the membrane electrode assembly, i.e., in an arrow K1 direction. By this, the end portions 20 (20e and 20f) of the membrane electrode assembly 2 are reduced in diameters by the first guide surface 73 and the second guide surface 74, and are corrected by the first bending die surface 71 and the second bending die surface 72. As a result, the first end portion 20e of the membrane electrode assembly 2 is bent so that a cross section thereof has a C shape, and the second end portion 20f is bent so that a cross section thereof has a reverse C shape.

In the structure shown in FIG. 12, a pressing portion 71r of the first bending die surface 71 presses inwardly (arrow S1 direction) the first end portion 20e of the membrane electrode assembly 2, thereby increasing bonding to the second current collector 62. A pressing portion 72r of the second bending die surface 72 presses inwardly (arrow S2 direction) the second end portion 20f of the membrane electrode assembly 2, thereby increasing bonding to the second current collector 62. As shown in FIG. 12, the membrane electrode assembly 2 extruded from a front end opening 7m of the correcting die 7 is bent in a tubular shape. The end portions 30 (30e and 30f) of the ion conductive membrane 3 of the tubular membrane electrode assembly 2 extruded from the front end opening 7m are bonded by radiating the high energy density beam Wp to the same. Therefore, bonding properties is further increased.

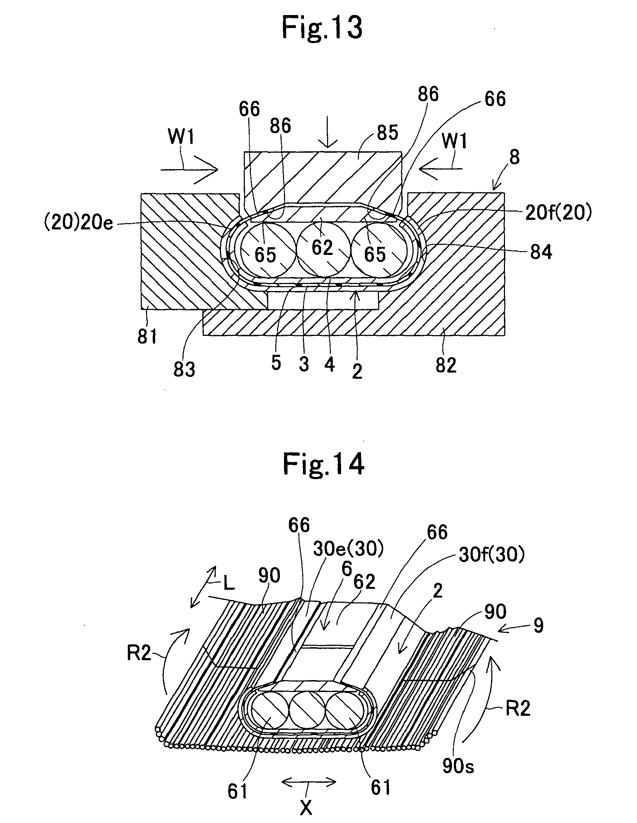

FIG. 13 shows a cross section cut in a direction crossing the longitudinal direction (arrow L direction) of the tubular fuel cell 1. In the structure shown in FIG. 13, a bending tool 8 is disposed outside the membrane electrode assembly 2. The bending tool 8 includes a first bending tool 81 and a second bending tool 82. The first bending tool 81 has a first bending die surface 83 having a C-shaped cross section. The second bending tool 82 has a secondbending die surface 84 having a reverse C-shaped cross section. The first bending die surface 83 and the second bending die surface 84 extend in the longitudinal direction (arrow L direction) of the tubular fuel cell 1.

The first bending tool 81 and the second bending tool 82 are moved close to the membrane electrode assembly 2 in an arrow W1 direction, so that the end portions 20 (20e and 20f) of the membrane electrode assembly 2 are bent in the folding direction by the first bending tool 81 and the second bending tool 82, and thus are formed in a C shape and a reverse C shape. Thereafter, a pressing body 85 having a pressing surface 86 is moved close to the membrane electrode assembly 2, so that the pressing surface 86 presses the end portions 20 (20e and 20f) of the membrane electrode assembly 2 to the second current collector 62, thereby further increasing bonding between the end portions 20 and the second current collector 62. In such a case, it is preferred that the pressure is set to a degree that the structure of the membrane electrode assembly 2 is not damaged.

In the structure shown in FIG. 14, a reed screen shaped winding sheet 9, which includes a plurality of rod shaped fine branch members 90 extending in the longitudinal direction (arrow L direction) of the tubular fuel cell 1 and arranged parallel by a connecting wire 90s, is used. An outer diameter of one of the fine branch members 90 is considerably smaller than a width of the tubular fuel cell 1. The winding sheet 9 has high rigidity in the extension direction (direction corresponding to the arrow L direction that is the longitudinal direction of the tubular fuel cell 1) of the fine branch members 90, and has high flexibility in the extension direction (direction corresponding to the arrow X direction that is the direction of the tubular fuel cell 1) of the fine branch members 90. In a state that the flat sheet shaped membrane electrode assembly 2 is loaded on the winding sheet 9, the membrane electrode assembly 2 is wound together with the winding sheet 9 in a winding direction (arrow R2 direction), thereby forming the tubular membrane electrode assembly 2 of good quality.

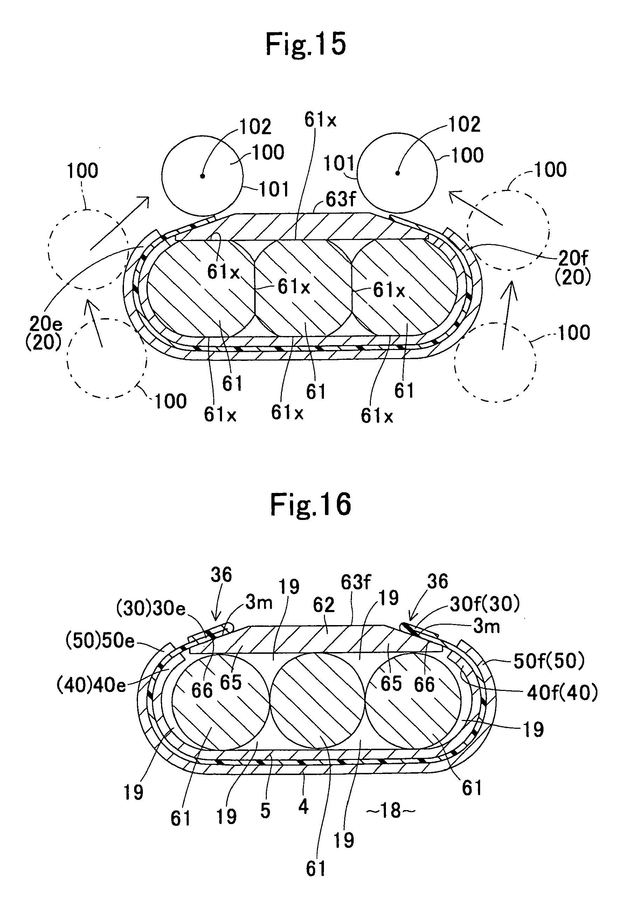

FIG. 15 shows a cross section cut in a direction (arrow X direction) crossing the longitudinal direction (arrow L direction) of the tubular fuel cell 1. In the structure shown in FIG. 15, a roller 100 as a rollable body is rollably disposed outside the flat sheet shaped membrane electrode assembly 2. The roller 100 includes a pressing surface 101 having an outer circumferential surface shape of a cylinder, and a shaft center 102. The roller 100 is moved close to the membrane electrode assembly 2 while being rotated on the shaft center 102, and rolls on the membrane electrode assembly 2. By this, the end portions 20 (20e and 20f) of the membrane electrode assembly 2 are pressed and bent in the folding direction, so that the first end portion 20e is bent in a C shape, and the second end portion 20f is bent in a reverse C shape. Therefore, the roller 100 serves as a pressing means to increase bonding properties by bending the end portions 20 of the membrane electrode assembly 2 and at the same time pressing the same to the junction portions 65 of the second current collector 62. In the structure shown in FIG. 15, the first current collectors 61 have flat shaped contact frequency increasing surfaces 61x for increasing a conductive contact area with the membrane electrode assembly 2. In such a case, a contact area between the contact frequency increasing surfaces 61x of the first current collectors 61 adjacent to each other and a contact area between the contact frequency increasing surfaces 61x of the first current collectors 61 and the second current collector 62 are increased.

However, as shown in FIG. 4, there is a case where the composite membrane including the first portions 61 and the second portions 62 is used as the ion conductive membrane 3. In such a case, because the composite membrane has high durability, even when electricity generating operation is performed for a long time, an advantage of increasing durability of the ion conductive membrane 3 can be obtained. In the tubular fuel cell 1, it is also considered to achieve the tubular ion conductive membrane by coating and solidifying a liquid type polymer material. However, it is difficult to form the tubular composite membrane including the first portions 61 and the second portions 62 by a manner of coating a liquid type polymer material. Therefore, a conventional tubular fuel cell had difficulty in forming a tubular fuel cell including the ion conductive membrane 3 formed in a composite membrane type.

According to this embodiment, the tubular ion conductive membrane 3 is not formed by a coating manner as described above, but the flat sheet shaped ion conductive membrane 3 is previously prepared, the fuel side electrode 4 is stacked on one side in the thickness direction of the ion conductive membrane 3, and at the same time the oxidizing agent side electrode 5 is disposed on the other side in the thickness direction of the ion conductive membrane 3. Accordingly, the flat sheet shaped membrane electrode assembly 2 is formed. Thereafter, a process of deforming the end portions 20 (20e and 20f) of the flat sheet shaped membrane electrode assembly 2 by bending the same is employed. Therefore, according to this embodiment, the tubular ion conductive membrane 3 formed in a composite membrane type can be easily fabricated from the flat sheet shaped ion conductive membrane 3 formed in a composite membrane type. Accordingly, the tubular fuel cell having superior current collecting properties and durability can be realized. As such, this embodiment is advantageous to application to a case in which the ion conductive membrane 3 has a composite membrane structure.

The tubular fuel cell 1 according to this embodiment employs a process of forming the flat sheet shaped membrane electrode assembly 2 and then deforming the end portions 20 of the membrane electrode assembly 2 by bending the same in the folding direction. Therefore, a conventional technique of fabricating the flat sheet shaped membrane electrode assembly 2 can be practically used, and thus it is advantageous to reduce manufacturing costs. Also, although this embodiment is structured such that the three first current collectors 61 are mounted parallel to each other, the number of the first current collectors is not limited to three, and can be one, two, four or more.

### [Embodiment 2]

Embodiment 2 of the present invention will now be described with reference to FIG. 16. This embodiment basically has the same constitution and operational effects as embodiment 1. Hereinafter, different parts from embodiment 1 will be primarily explained. The end portions 30 (first end portion 30e and second end portion 30f) of the ion conductive membrane 3 of the membrane electrode assembly 2 are further folded in a U shape, thereby forming plural stacked layers. Accordingly, folded portions 36 are formed. The folded portions 36 are bonded to the junction surfaces 66 of the junction portions 65 of the second current collector 62 by the adhesive 3m or radiation of high energy beam. In such a case, even when the ion conductive membrane 3 has a small thickness, the bonded portion of the end portions 30 (first end portion 30e and second end portion 30f) of the ion conductive membrane 3 obtains a satisfactory thickness. Accordingly, the end portions 30 (first end portion 30e and second end portion 30f) of the ion conductive membrane 3 can be easily bonded to the junction surfaces 66 of the junction portions 65 of the second current collector 62. The folded portions 36 may be a two-folded type, a three-folded type or more.

Also, according to this embodiment, the fuel side electrode 4 of the membrane electrode assembly 2 is disposed at an outer side, and opposes the fuel fluid channel 18 formed outside the tubular fuel cell 1. The oxidizing agent side electrode 5 is disposed at an inner side, and opposes the oxidizing agent fluid channel 19 formed inside the tubular fuel cell 1. However, similar to embodiment 1, the fuel side electrode 4 of the membrane electrode assembly 2 may be disposed at an inner side, and may oppose the fuel fluid channel 18 formed inside the tubular fuel cell 1. In such a case, the oxidizing agent side electrode 5 is disposed at an outer side, and opposes the oxidizing agent fluid channel 19 formed outside the tubular fuel cell 1.

### [Embodiment 3]

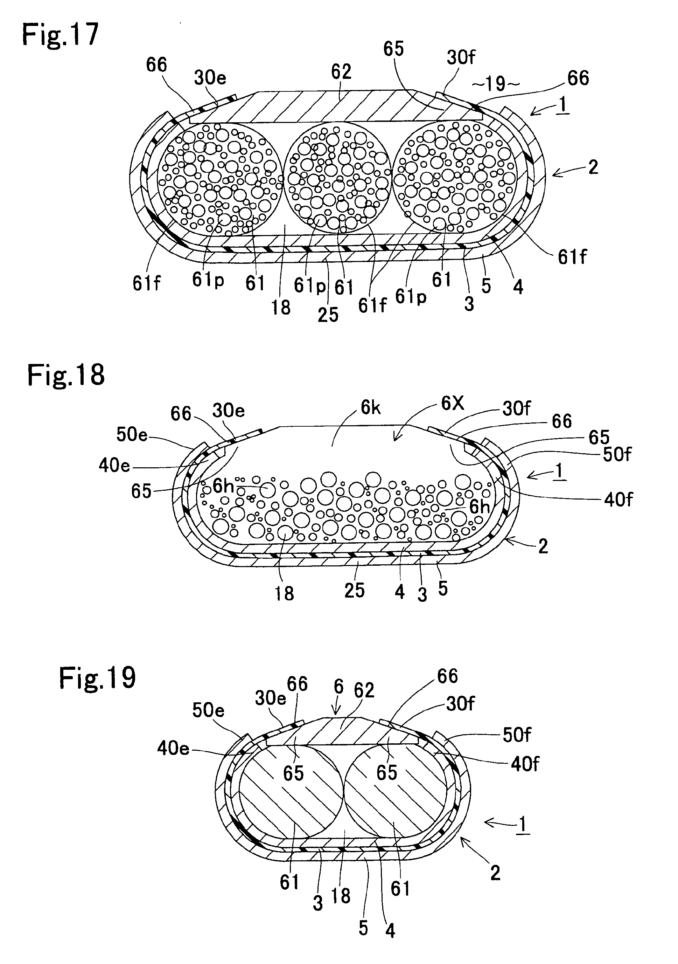

Embodiment 3 of the present invention will now be described with reference to FIG. 17. This embodiment basically has the same constitution and operational effects as embodiment 1. Hereinafter, different parts from embodiment 1 will be primarily explained. The first current collectors 61 are formed with a plurality of holes (through-holes) 61p, through which the fuel fluid can flow, and have porosity, gas transmitting properties and conductivity. The holes 61p have gas transmitting properties in the thickness direction and longitudinal direction of the first current collectors 61. The fuel fluid passing through the holes 61p of the first current collectors 61 can be moved to the fuel side electrode 4 from the first conductive surfaces 61f that are the outer wall surfaces of the first current collectors 61. Therefore, it is easy to supply the fuel fluid to the fuel side electrode 4. In this regard, the second current collector 62 is formed in a dense body having high dense properties, and has gas barrier properties to the fuel fluid in the fuel fluid channel 18. Therefore, the fuel fluid in the fuel fluid channel 18 and the oxidizing agent fluid in the oxidizing agent fluid channel 19 are restrained from permeating the first current collectors 61.

### [Embodiment 4]

Embodiment 4 of the present invention will now be described with reference to FIG. 18. This embodiment basically has the same constitution and operational effects as embodiment 1. Hereinafter, different parts from embodiment 1 will be primarily explained. A current collector 6X includes porous portions 6h (corresponding to the first current collectors) having gas transmitting properties and a dense portion 6k (corresponding to the second current collector) having gas barrier properties. Because the dense portion 6k having high dense properties and gas barrier properties is provided, the fuel fluid channel 18 and the oxidizing agent fluid channel 19 are securely isolated from each other. The porous portions 6h have gas transmitting properties in the thickness direction and longitudinal direction of the current collector 6X.

### [Embodiment 5]

Embodiment 5 of the present invention will now be described with reference to FIG. 19. This embodiment basically has the same constitution and operational effects as embodiment 1. Hereinafter, different parts from embodiment 1 will be primarily explained. The first current collectors 61 are received in the tubular membrane electrode assembly 2, and the second current collector 62 is in electric contact with the first current collectors 61, thereby forming the current collector 6. Therefore, a current collecting path of the membrane electrode assembly 2 is easily secured. The first current collectors 61 are formed by two wire members.

### [Embodiment 6]

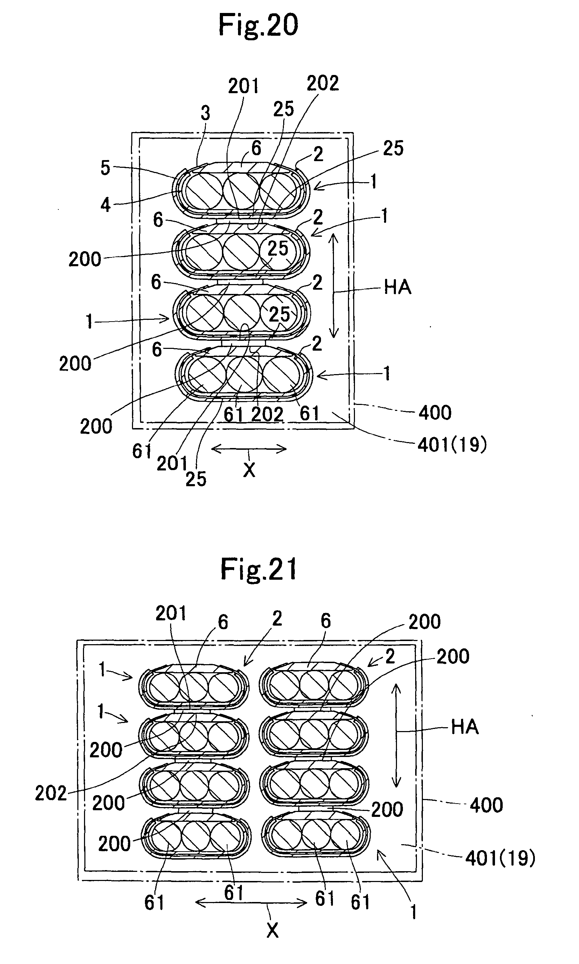

Embodiment 6 of the present invention will now be described with reference to FIG. 20. This embodiment basically has the same constitution and operational effects as embodiment 1. Hereinafter, different parts from embodiment 1 will be primarily explained. The tubular fuel cell 1 includes the tubular membrane electrode assembly 2 and the current collector 6 mounted to the membrane electrode assembly 2. The tubular membrane electrode assembly 2 includes the ion conductive membrane 3, the fuel side electrode 4 disposed at one side in the thickness direction of the ion conductive membrane 3, and the oxidizing agent side electrode 5 disposed at the other side in the thickness direction of the ion conductive membrane 3.

The tubular fuel cell 1 of this embodiment can be stacked on other tubular fuel cells. Therefore, as shown in FIG. 20, the tubular fuel cells 1 are arranged in a stacked state parallel to one another in a single direction (arrow HA direction). The single direction (arrow HA direction) corresponds to a direction perpendicular to the arrangement direction (arrow X direction) of the first current collectors 61.

As shown in FIG. 20, intermediate connector parts 200 having conductivity are interposed between the tubular fuel cells 1 adjacent to each other. Each of the intermediate connector parts 200 includes a first connecting surface 201 electrically bonded to the middle portion 25 of the oxidizing agent side electrode 5 of one of the tubular fuel cells 1, and a second connecting surface 202 electrically bonded to the current collector 6 of the fuel side electrode 4 of the other tubular fuel cell 1. Therefore, the plurality of tubular fuel cells 1 are stacked so as to be electrically connected in series to one another, and are received in a case chamber 401 of a case 400. The case chamber 401 forms the oxidizing agent fluid channel 19 through which the oxidizing agent fluid (oxygen-contained gas) flows. As described above, because the plurality of tubular fuel cells 1 are stacked while being electrically connected in series to one another, simplification or elimination of a booster circuit can be realized, thereby increasing overall efficiency.

Because the middle portion 25 of the membrane electrode assembly 2 is formed in a substantially flat shape, it is easy to increase a conductive area of contacting the first connecting surface 201 of the intermediate connector part 200 to a portion of the oxidizing agent side electrode 5, corresponding to the middle portion 25, and thus an output area of electrical energy is easily secured. Also, in some cases, the intermediate connector part 200 may be eliminated, and the oxidizing agent side electrode 5 disposed outside one of the tubular fuel cells 1 may be directly contacted to the current collector 6 of the other tubular fuel cell 1.

### [Embodiment 7]

Embodiment 7 of the present invention will now be described with reference to FIG. 21. This embodiment basically has the same constitution and operational effects as embodiment 6. Hereinafter, different parts from embodiment 1 will be primarily explained. The tubular fuel cells 1 are stacked parallel to one another in a single direction (arrow HA direction). Here, the single direction (arrow HA direction) corresponds to a direction perpendicular to the arrangement direction (arrow X direction) of the first current collectors 61. Also, the tubular fuel cells 1 are arranged parallel to each other in the arrow X direction. The arrow X direction corresponds to the arrangement direction of the first current collectors 61.

As shown in FIG. 21, the intermediate connector parts 200 are interposed between the tubular fuel cells 1 adjacent to each other. The plurality of tubular fuel cells 1 are electrically connected to one another, and are received in the case chamber 401 of the case 400. The case chamber 401 forms the oxidizing agent fluid channel 19 through which the oxidizing agent fluid (e.g., oxygen-contained gas) flows.

### [Embodiment 8]

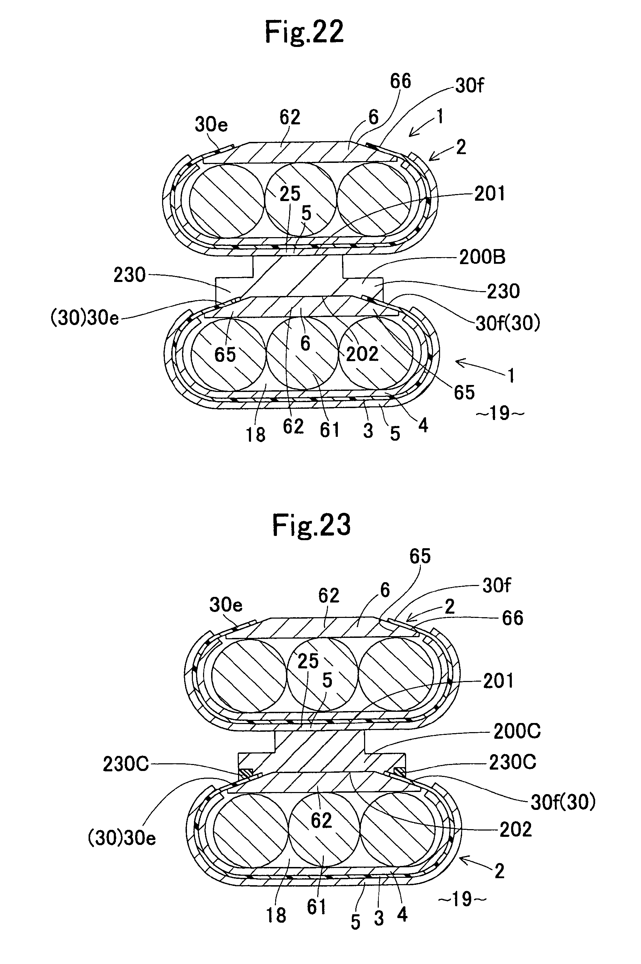

Embodiment 8 of the present invention will now be described with reference to FIG. 22. This embodiment basically has the same constitution and operational effects as embodiment 1. Hereinafter, different parts from embodiment 1 will be primarily explained. The tubular fuel cell 1 includes the tubular membrane electrode assembly 2 and the current collector 6 mounted to the membrane electrode assembly 2. An intermediate connector part 200B having conductivity is interposed between the tubular fuel cells 1 adjacent to each other.

The intermediate connector part 200B includes a flat shaped first connecting surface 201 in electric contact with a flat portion (corresponding to the middle portion 25) of the oxidizing agent side electrode 5 of one of the tubular fuel cells 1, and a flat shaped second connecting surface 202 in electric contact with the second current collector 62 of the current collector 6 of the fuel side electrode 4 of the other tubular fuel cell 1.

The intermediate connector part 200B further includes a clamping member 230. The clamping member 230 serves to hold the end portions 30 (first end portion 30e and second end portion 30f) of the ion conductive membrane 3 of the membrane electrode assembly 2 together with the junction portions 65 of the current collector 6, and accordingly is disposed at a position in which the end portions 30 are fitted. Such a clamping member 230 improves fixing properties of the end portions 30 (first end portion 30e and second end portion 30f) of the ion conductive membrane 3, and improves durability of the end portions 30.

### [Embodiment 9]

Embodiment 9 of the present invention will now be described with reference to FIG. 23. This embodiment basically has the same constitution and operational effects as embodiment 8. Hereinafter, different parts from embodiment 8 will be primarily explained. An intermediate connector part 200C having conductivity is interposed between the tubular fuel cells 1 adjacent to each other. The intermediate connector part 200C includes a first connecting surface 201 in electric contact with a flat portion (corresponding to the middle portion 25) of the oxidizing agent side electrode 5 of one of the tubular fuel cells 1, and a second connecting surface 202 in electric contact with the current collector 6 of the fuel side electrode 4 of the other tubular fuel cell 1.

The intermediate connector part 200C includes a clamping member 230C. The clamping member 230C is made of a proper material to hold the end portions 30 (first end portion 30e and second end portion 30f) of the ion conductive membrane 3 of the membrane electrode assembly 2 together with the current collector 6. For example, the clamping member 230C is made of an elastic material formed by a polymer material such as resin or rubber. Such a clamping member 230C is disposed at a position in which the end portions 30 of the ion conductive membrane 3 of the membrane electrode assembly 2 are fitted. The clamping member 230C further improves fixing properties of the end portions 30 of the ion conductive membrane 3, and improves durability of the end portions 30.

### [Embodiment 10]

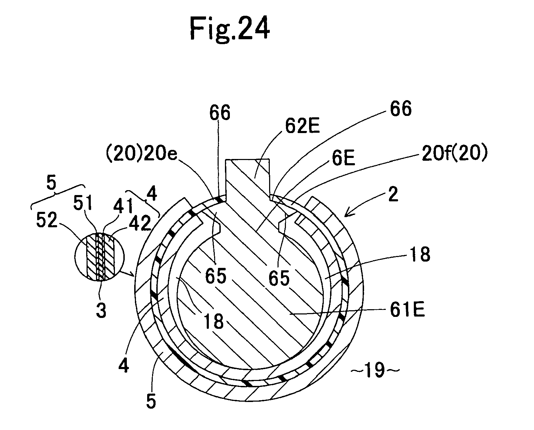

Embodiment 10 of the present invention will now be described with reference to FIG. 24. This embodiment basically has the same constitution and operational effects as embodiment 1. Hereinafter, different parts from embodiment 1 will be primarily explained. The overall membrane electrode assembly 2 is bent in a substantially cylindrical shape or a similar cylindrical shape. A current collector 6E is formed in a dense body, and is formed by integrally molding a first current collector 61E disposed in the membrane electrode assembly 2 and a second current collector 62E exposed from the membrane electrode assembly 2. The end portions 20 (20e and 20f) of the membrane electrode assembly 2 are bent in the folding direction.

In other words, the overall ion conductive membrane 3 of the membrane electrode assembly 2 is bent in a cylindrical shape or a similar cylindrical shape together with the fuel side electrode 4 and the oxidizing agent side electrode 5. The end portions 30 (first end portion 30e and second end portion 30f) of the ion conductive membrane 3 are bent, and are bonded to the junction surfaces 66 of the junction portions 65 of the current collector 6E. Also, the fuel side electrode 4 includes the fuel side catalyst layer 41 and the fuel side transmission layer 42, and the oxidizing agent side electrode 5 includes the oxidizing agent side catalyst layer 51 and the oxidizing agent side transmission layer 52. The fuel fluid channel 18 is formed between an outer circumferential wall surface of the first current collector 61E and the fuel side electrode 4. The position of the fuel fluid channel 18 and the position of the oxidizing agent fluid channel 19 may be exchanged to each other.

### [Embodiment 11]

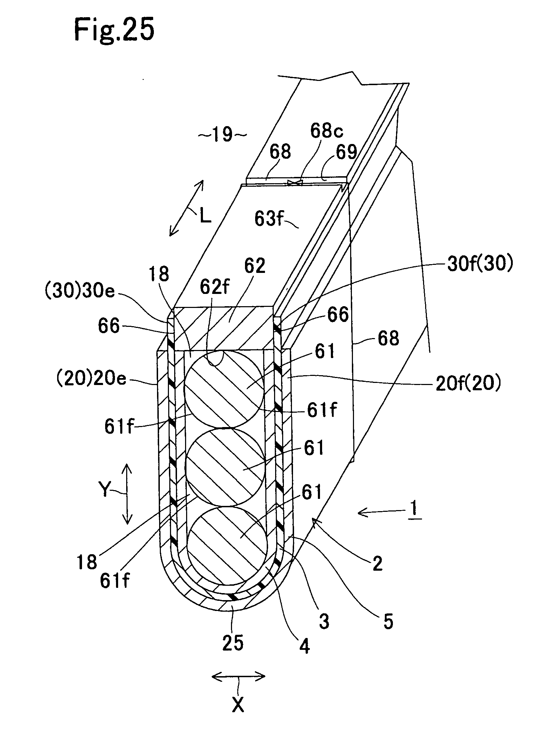

Embodiment 11 of the present invention will now be described with reference to FIG. 25. This embodiment basically has the same constitution and operational effects as embodiment 1. Hereinafter, different parts from embodiment 1 will be primarily explained. FIG. 25 is a perspective view of the flat tubular fuel cell 1 having a cross section cut in a transverse direction (X direction).

As shown in FIG. 25, the tubular fuel cell 1 according to this embodiment is formed in a vertically flat tubular shape. The overall membrane electrode assembly 2 is bent so that a cross section thereof has a U shape. Therefore, the membrane electrode assembly 2 includes the ion conductive membrane 3 which is formed by using a solid polymer material as a base material and is bent in a U shape, the fuel side electrode 4 which is disposed at one side in the thickness direction of the ion conductive membrane 3 and is bent so that a cross section thereof has a U shape, and the oxidizing agent side electrode 5 which is disposed at the other side in the thickness direction of the ion conductive membrane 3 and is bent so that a cross section thereof has a U shape.

As shown in FIG. 25, the middle portion 25 in the transverse direction (arrow X direction) of the membrane electrode assembly 2 serves as a starting point from which the membrane electrode,assembly 2 is bent in the folding direction, and is bent in a substantially semi-circular shape. The end portions 20 (first end portion 20e and second end portion 20f) disposed outward from the middle portion 25 have a linear shape.
As shown in FIG. 25, the current collector 6 includes the wire or rod shaped first current collectors 61 in electric contact with the fuel side electrode 4 of the membrane electrode assembly 2, and the wire or rod shaped second current collector 62 in electric contact with the first current collectors 61. The first current collectors 61 are formed by arranging a plurality of wires or rods, which have a cross section of a predetermined shape and extend in the longitudinal direction (arrow L direction), parallel to each other in a direction (arrow Y direction) perpendicular to the direction (arrow X direction) of the membrane electrode assembly 2.

As shown in FIG. 25, the first conductive surfaces 61f formed on outer wall surfaces of the first current collectors 61 are in electric contact with the fuel side electrode 4 of the membrane electrode assembly 2. The second current collector 62 is formed in a plate shape, which has a cross section of a predetermined shape and extends in the longitudinal direction (arrow L direction). The second current collector 62 includes a second conductive surface 62f in electric contact with the first conductive surfaces 61f of the first current collectors 61, and an exposed conductive surface 63f exposed outside. Because the first current collectors 61 and the second current collector 62 are assembled with each other, a current collecting path of the membrane electrode assembly 2 can be easily secured. Because the first current collectors 61 and the second current collector 62 extend in the longitudinal direction (arrow L direction), it is easy to secure a length in the longitudinal direction of the tubular fuel cell 1.

As shown in FIG. 25, the second current collector 62 has the flat shaped junction surfaces 66 to which the linear shaped end portions 30 (linear shaped first end portion 30e and linear shaped second end portion 30f) of the ion conductive membrane 3 of the membrane electrode assembly 2 are bonded. If the first end portion 30e and the second end portion 30f of the ion conductive membrane 3 of the membrane electrode assembly 2 are bonded to the junction surfaces 66 of the junction portions 65 of the second current collector 62, the fuel fluid channel 18 and the oxidizing agent fluid channel 19 are isolated from each other. Accordingly, the fuel fluid flowing through the fuel fluid channel 18 is prevented from flowing into the oxidizing agent fluid channel 19. Similarly, the oxidizing agent fluid flowing through the oxidizing agent fluid channel 19 is prevented from flowing into the fuel fluid channel 18. Also, the position of the fuel fluid channel 18 and the position of the oxidizing agent fluid channel 19 may be exchanged to each other.

### [Embodiment 12]

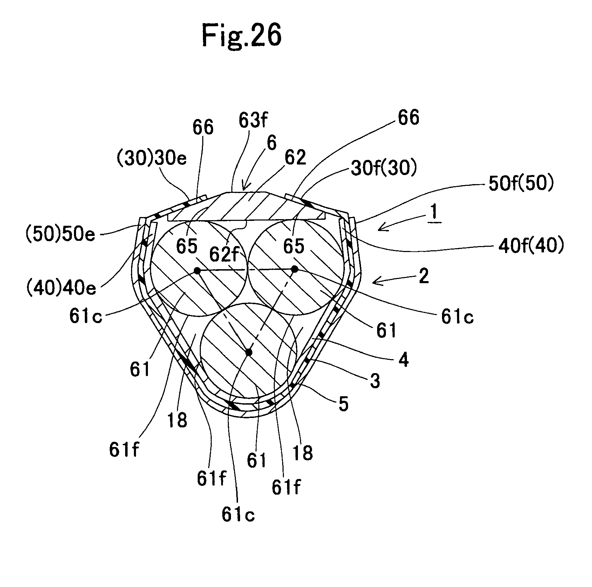

Embodiment 12 of the present invention will now be described with reference to FIG. 26. This embodiment basically has the same constitution and operational effects as embodiment 1. Hereinafter, different parts from embodiment 1 will be primarily explained. As shown in FIG. 26, a plurality of wire shaped or rod shaped first current collectors 61 are provided in a group while being in electric contact with the fuel side electrode 4 of the membrane electrode assembly 2. The plurality of first current collectors 61 are stacked on one another in a vertical direction and horizontal direction and are mounted parallel to one another in a bound state so as to be contacted to one another. The plurality of first current collectors 61 are arranged such that if centers 61c of the adjacent first current collectors 61 are connected to each other, an imaginary triangular shape is formed. The first conductive surface 61f, which is an outer circumferential wall surface of each of the first current collectors 61, has an outer wall surface, whose cross section has a circular shape. In such a case, frequency of electrically contacting the first conductive surfaces 61f of the adjacent first current collectors 61 to each other is increased. According to such a structure, even when the number of the first current collectors 61 is increased, it is easy to form the fuel cell 1 which has a cross section of a shape approximate to a similar circle, not a non-flat type.

### [Embodiment 13]

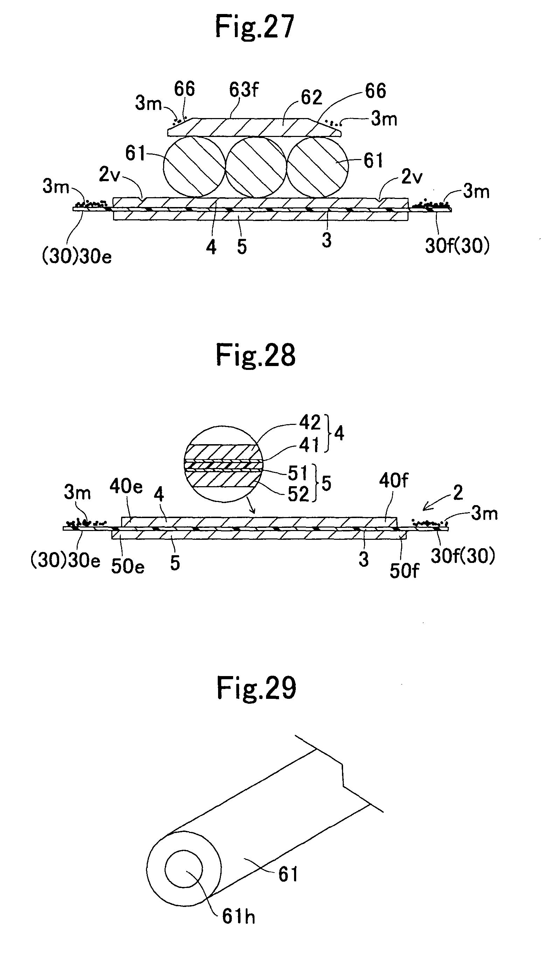

Embodiment 13 of the present invention will now be described with reference to FIG. 27. Hereinafter, different parts from embodiment 1 will be primarily explained. A single or a plurality of bending facilitating portions 2v are formed on a surface of the membrane electrode assembly 2, which is to be a bent inner circumferential side. The bending facilitating portions 2v are formed at the fuel side electrode 4 which is disposed at the inner circumferential side of the membrane electrode assembly 2. The bending facilitating portions 2v serve to facilitate the bending of the membrane electrode assembly 2, and may be formed in a concave shaped portion or a recess. It is preferred that the bending facilitating portions 2v extend continuously or intermittently with intervals therebetween in the longitudinal direction of the tubular fuel cell 1. Also, if the inner circumferential side of the membrane electrode assembly 2 is the oxidizing agent side electrode 5, the bending facilitating portions 2v are formed at the oxidizing agent side electrode 5.

### [Embodiment 14]

Embodiment 14 of the present invention will now be described with reference to FIG. 28. Hereinafter, different parts from embodiment 1 will be primarily explained. In a cross section (refer to FIG. 28), the electrode disposed at the bent outer circumferential side of the membrane electrode assembly 2 is set to be longer than the electrode disposed at the bent inner circumferential side. The electrode disposed at the bent inner circumferential side is set to be shorter than the electrode disposed at the bent outer circumferential side. Particularly, in the membrane electrode assembly 2, the fuel side electrode 4 (electrode disposed at the bent inner circumferential side of the membrane electrode assembly 2) is set to be shorter than the oxidizing agent side electrode 5. The oxidizing agent side electrode 5 (electrode disposed at the bent outer circumferential side of the membrane electrode assembly 2) is set to be longer than the fuel side electrode 4. Therefore, when the membrane electrode assembly 1 is bent in a tubular shape, in the cross section, it is easy to take a balance between a value of an arc length of the electrode disposed at the bent outer circumferential side and a value of an arc length of the electrode disposed at the bent inner circumferential side.

### [Embodiment 15]

Embodiment 15 of the present invention will now be described with reference to FIG. 29. Hereinafter, different parts from embodiment 1 will be primarily explained. In the cross section (refer to FIG. 28), a hollow shaped refrigerant passage 61h is formed inside the first current collector 61 constituting the current collector 6 along the length of the first current collector 61. A refrigerant (e.g., cooling water or cooling gas having high electrical insulation) passes through the refrigerant passage 61h. The first current collector 61 may be made of a metal (titanium, stainless steel, etc.) based or carbon based material. An excess of temperature of the tubular fuel cell 1 is restrained.

### [Embodiment 16]

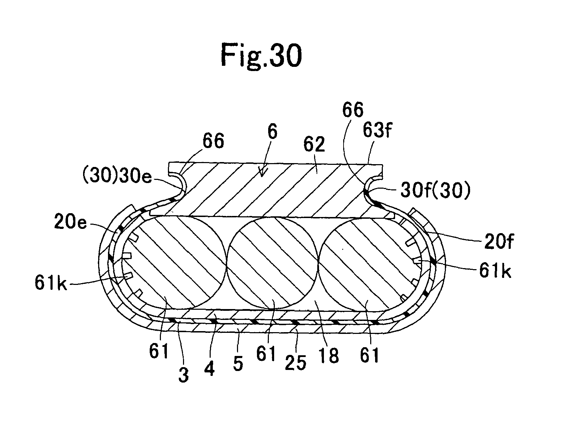

Embodiment 16 of the present invention will now be described with reference to FIG. 30. Hereinafter, different parts from embodiment 1 will be primarily explained. The first end portion 30e of the ion conductive membrane 3 of the membrane electrode assembly 2 is bent in a reverse S shape and extends in the folding direction, so as to be bonded to one of the reverse C-shaped junction surfaces 66 of the second current collector 62. The second end portion 30f of the ion conductive membrane 3 is bent in an S shape and extends in the folding direction, so as to be bonded to the other reverse C-shaped junction surface 66 of the second current collector 62. In such a case, an area of bonding the first end portion 30e and the second end portion 30f of the ion conductive membrane 3 to the second current collector 62 is increased, and accordingly bonding force is increased. Here, the S-shaped trajectory includes a C shape. The reverse S-shaped trajectory includes a reverse C shape.

### (Other Embodiments)

According to the respective above-described embodiments, the current collector 6 includes the first current collectors 61 in electric contact with the fuel side electrode 4 of the membrane electrode assembly 2 and the second current collector 62 in electric contact with the first current collectors 61, however the shape of the current collector is not limited thereto. The number of the first current collectors 61 may be one, two, three or four, and is not particularly limited. The shape and number of the second current collector 6 are not limited to the above-described shape and number.
The tubular fuel cell is not limited to the structure that the fuel fluid channel 18 is disposed inside the tubular fuel cell and the oxidizing agent fluid channel 19 is disposed outside the tubular fuel cell. Therefore, the fuel fluid channel 18 may be disposed outside the tubular fuel cell, and the oxidizing agent fluid channel 19 may be disposed inside the tubular fuel cell. The material of the ion conductive membrane is not limited to a polymer based material, but can be an organic-inorganic composite based material.

According to embodiment 1, the fuel side electrode 4 includes the fuel side catalyst layer 41 in contact with the ion conductive membrane 3 and the fuel side transmission layer 42 disposed on the opposite side to the ion conductive membrane 3, but the structure of the fuel side electrode is not limited thereto, and elimination of the fuel side transmission layer 42 can be anticipated when the first current collectors 61 have both a current collecting function and a gas transmitting function. The embodiment shown in FIG. 11 is structured such that the thread shaped or string shaped winding member 68 is wound on the bent membrane electrode assembly 2 from the outside and both the end portions 68a of the winding member 68 are tied to each other, however the winding member 68 may be eliminated.

The present invention is not limited to the embodiments shown in the above description and drawings, and changes may be made in the embodiments without departing from the principles and spirit of the invention. If possible, the constitution peculiar to the specific embodiment can be applied to other embodiments. The constitution employed in the specific embodiment may be partially replaced with the constitution of other embodiments.

### INDUSTRIAL APPLICABILITY

The present invention can be applied to, for example, a vehicle fuel cell system, a fixed fuel cell system, a fuel cell system for electrical equipment, a fuel cell system for electronic equipment and a portable fuel cell system.

## Claims

1. A tubular fuel cell comprising:
(i) a tubular membrane electrode assembly including an ion conductive membrane having ion conductivity, a fuel side electrode disposed on one side in a thickness direction of the ion conductive membrane, and an oxidizing agent side electrode disposed on the other side in the thickness direction of the ion conductive membrane; and
(ii) a current collector provided at the membrane electrode assembly,
wherein (iii) in a cross section in a direction crossing a longitudinal direction of the tubular fuel cell, the membrane electrode assembly has a shape bent in a folding direction.

2. The tubular fuel cell according to claim 1, wherein the membrane electrode assembly includes a first end portion having a cross section bent in a C shape, and a second end portion having a cross section bent in a reverse C shape.

3. The tubular fuel cell according to claim 1 or 2, wherein in the cross section in the direction crossing the longitudinal direction of the fuel cell, (i) the ion conductive membrane of the membrane electrode assembly includes a first end portion which protrudes from a first end portion of the fuel side electrode and a first end portion of the oxidizing agent side electrode and is bonded to the current collector; and
(ii) the ion conductive membrane of the membrane electrode assembly includes a second end portion which protrudes from a second end portion of the fuel side electrode and a second end portion of the oxidizing agent side electrode and is bonded to the current collector.

4. The tubular fuel cell according to any one of claims 1 to 3, wherein the ion conductive membrane is formed by using a solid polymer material as a base material.

5. The tubular fuel cell according to any one of claims 1 to 4, wherein the ion conductive membrane is configured as a composite membrane including first portions having high ion conductivity and second portions having reinforcing properties higher than the first portions.

6. The tubular fuel cell according to any one of claims 1 to 5, wherein the current collector includes junction portions, to which end portions of the membrane electrode assembly are bonded.

7. The tubular fuel cell according to any one of claims 1 to 6, further comprising:
a winding member to increase integrity of end portions of the membrane electrode assembly and the current collector by winding the membrane electrode assembly.

8. The tubular fuel cell according to claim 7, wherein the current collector includes a concave shaped or convex shaped receiving portion to receive the winding member therein.

9. The tubular fuel cell according to any one of claims 1 to 8, wherein the fuel side electrode includes a fuel side catalyst layer and a fuel side transmission layer, and the oxidizing agent side electrode includes an oxidizing agent side catalyst layer and an oxidizing agent side transmission layer.

10. The tubular fuel cell according to any one of claims 1 to 9, wherein the current collector includes first current collectors in electric contact with the fuel side electrode or the oxidizing agent side electrode, and a second current collector exposed from the membrane electrode assembly to be in electric contact with the first current collectors.

11. The tubular fuel cell according to any one of claims 1 to 10, wherein the current collector has a shape extending in the longitudinal direction of the tubular fuel cell.

12. The tubular fuel cell according to any one of claims 1 to 11, further comprising:
a clamping member provided at a predetermined position, in which end portions of the membrane electrode assembly are fitted, to hold the end portions of the membrane electrode assembly together with the current collector.

13. The tubular fuel cell according to any one of claims 1 to 12, further comprising:
a single or a plurality of bending facilitating portions formed on a surface of a bent inner circumferential side of the membrane electrode assembly.

14. The tubular fuel cell according to any one of claims 1 to 13, wherein one of the fuel side electrode and the oxidizing agent side electrode is an electrode of a bent outer circumferential side, and the other one of the fuel side electrode and the oxidizing agent side electrode is an electrode of a bent inner circumferential side; and
in a cross section, the electrode of the bent outer circumferential side of the membrane electrode assembly is set to be long, and the electrode of the bent inner circumferential side is set to be short.

15. The tubular fuel cell according to any one of claims 1 to 14, wherein the current collector is formed with a hollow shaped refrigerant passage inside the current collector, through which a refrigerant passes.

16. A method of producing the tubular fuel cell according to claim 1, the method comprising the steps of:
(i) preparing a flat sheet shaped membrane electrode assembly including a flat sheet shaped ion conductive membrane having ion conductivity, a fuel side electrode disposed on one side in a thickness direction of the ion conductive membrane and an oxidizing agent side electrode disposed on the other side in the thickness direction of the ion conductive membrane, and a current collector provided at the membrane electrode assembly; and
(ii) in a cross section in a direction crossing a longitudinal direction of the tubular fuel cell, forming bent portions by bending end portions of the flat sheet shapedmembrane electrode assembly in a folding direction, and fixing the bent portions to the current collector.

17. The method according to claim 16, wherein the step of bending includes the steps of (a) preparing a correcting member including a correcting cavity which has a first bending die surface and a second bending die surface provided opposite to each other and extends in the longitudinal direction of the tubular fuel cell, and (b) bending the end portions of the membrane electrode assembly in the folding direction through correction by the first die surface and the second die surface by moving the membrane electrode assembly before corrected to the correcting cavity of the correcting member relatively to the correcting member in the longitudinal direction, and fixing the bent portions to the current collector.

18. The method according to claim 16, wherein the step of bending includes, in the cross section in the direction crossing the longitudinal direction of the tubular fuel cell, the steps of (a) disposing a bending tool outside the membrane electrode assembly, and (b) bending the end portions of the membrane electrode assembly in the folding direction through the bending tool by moving the bending tool close to the membrane electrode assembly, and fixing the bent portions to the current collector.

19. The method according to claim 16, wherein the step of bending includes, in the cross section in the direction crossing the longitudinal direction of the tubular fuel cell, the steps of (a) disposing a rollable body outside the membrane electrode assembly, and (b) bending the end portions of the membrane electrode assembly in the folding direction by moving the rollable body close to the membrane electrode assembly and rolling the rollable body along the membrane electrode assembly, and fixing the bent portions to the current collector.

20. The method according to any one of claims 16 to 19,
wherein the step of fixing is performed through an adhesive coated on at least a portion of the membrane electrode assembly and the current collector, or welding or fusion of at least a portion of the membrane electrode assembly.

21. The method according to any one of claims 16 to 20,
wherein the step of fixing is performed by bonding the end portions of the ion conductive membrane of the membrane electrode assembly to the current collector.

22. The method according to claim 21, wherein the bonding is performed by applying at least one of a pressing force, high energy density beam, ultraviolet light, infrared light and thermal energy to the bonding portion between the membrane electrode assembly and the current collector.
